# DEMANDE DE BREVET EUROPEEN

(11) **EP 2 400 433 A1**
(43) Date de publication de la demande: **28.12.2011**
(21) Numéro de dépôt: 11007600.7
(22) Date de dépôt: 11.03.2009
(51) Int. Cl.: G06K 17/00

(54) **Maillage sans fil à réduction de trafic, pour aéronef**

(30) Priorité: 17.03.2008 FR 0801433
(62) Demande divisionnaire de: 09003520.5
(71) Demandeur: EUROCOPTER, 13725 Marignane Cédex (FR)
(72) Inventeur: Feuillebois, Christian, 13140 Lambesc (FR); Glade, Mathieu, 13700 Marignane (FR); Pauly, Eric, F-Vieux village 13127 Vitrolles (FR)
(74) Mandataire: Pouillot, Laurent Pierre Paul

(57) **Abrégé**

L'invention vise un maillage sans fil à trafic réduit, qui configure :
au moins un noeud (19) de base qui relie sans fil un groupe d'étiquettes (17-17A) à leur lecteur (18) local exclusivement, une trame intermédiaire (22) qui relie sans fil ce lecteur (18) local exclusivement à au moins un routeur (21) embarqué, et une maille (24) embarquée terminale qui relie exclusivement ce routeur (21) embarqué à un concentrateur embarqué (23).
En transaction, ce concentrateur (23) décode l'entête de cette information pour en connaître le destinataire et ne l'envoie que vers les transpondeurs (17-17A), lecteurs (18) et routeurs (21) prévus, ceci réduisant le trafic sur le maillage complet.

## Description

L'invention vise la gestion de configuration d'un aéronef tel qu'un hélicoptère. Notamment, l'invention se situe dans le domaine de l'entretien (ou maintenance) et de la logistique dans l'aéronautique.

Dans un tel aéronef, et plus généralement pour tout matériel civil ou militaire, la plupart de ses composants sont couplés à un système de traçabilité, qu'il s'agisse de matériel embarqué comme ses pièces constitutives et équipements, ou immatériels comme les logiciels.

Ce système assure le suivi et la gestion de données de traçabilité, qui incluent typiquement l'identification de ce composant, ses conditions de garantie, ses fabricants et utilisateurs et des renseignements pratiques tels que le nombre d'heures de fonctionnement, sa date de fabrication et ses évolutions.

Actuellement, des données de traçabilité sont physiquement couplées au composant, par exemple sous forme d'étiquette rivetée ou non, de numéros gravés, de codes-barres, etc. On parle de marquage du composant.

Egalement, les données de traçabilité d'un composant sont manuellement reportées voire mises à jour, sur une « Fiche Matricule Equipement » ou « FME », c'est-à-dire un document papier.

En outre, ces données sont manuellement reportées et mises à jour dans un outil de suivi, qui regroupe et gère toutes les FME d'un même appareil.

Bien qu'il apporte de nombreux avantages, le système de traçabilité (marquage, fiche et outil de suivi) actuel comporte aussi des imperfections.

D'abord, les données de traçabilité sont falsifiables, de sorte que des composants défectueux, non compatibles voire contrefaits peuvent être employés dans l'appareil au détriment de sa sécurité.

De plus, par exemple lors de l'entretien de l'appareil, il peut s'avérer délicat ou fastidieux de consulter ces données, notamment quand le composant qui les porte est d'accès difficile.

En outre, avec les systèmes actuels de traçabilité, les mises à jour ne sont effectuées que de manière temporisée, le plus souvent après dépose du composant ou lors d'un passage à l'entretien de l'appareil. Par ailleurs, ces mises à jour sont effectuées le plus souvent par écriture ou saisie manuelle, ce qui risque d'être une source d'erreurs.

Les récents progrès réalisés depuis quelque décennies dans le domaine de l'électronique et des communications sans fil ont permis de faciliter l'acquisition, le stockage et la gestion de données de traçabilité.

A ce titre, certains documents relatifs à des systèmes de traçabilité plus ou moins largement automatisés sont présentés ci-après.

Le document EP0495104 décrit un système de gestion pour véhicule, où une carte sans contact enregistre diverses informations relatives à l'exploitation du véhicule. Une étiquette électronique d'identification est attachée à la cabine du véhicule.

Le document FR21055206 décrit une liaison sans fil entre une structure dont on désire contrôler d'éventuelles défaillances, et un système apte à déclencher automatiquement une action en cas de défaillance de la structure.

Le document FR2871260 décrit une mémoire de maintenance qui est contenue dans un équipement ou ajoutée à l'équipement. Cette mémoire contient des zones non modifiables pour stocker des informations de base du constructeur et des zones modifiables pour stocker des informations liées à des évènements.

Le document GB2366430 décrit le couplage d'une étiquette électronique RFID (de l'anglais « radio frequency identification », soit identification par radio fréquences) à une pièce de véhicule, afin de l'identifier et d'en déduire une procédure technique (ici de recyclage) à appliquer à cette pièce après son démontage, et non lorsque celle-ci est intégrée au véhicule.

Le document GB2176637 décrit un appareil complexe avec une mémoire électronique intégrée, au sein de laquelle des informations telles qu'un identifiant de l'appareil et des instructions d'entretien sont enregistrées ou lues. Ces informations sont rendues lisibles via un ordinateur par exemple dans un centre de réparation. La manière dont l'ordinateur et l'appareil sont reliés ne ressort cependant pas de ce document.

Le document US4739482 décrit un affichage automatique de certains intervalles d'entretien d'un véhicule.

Le document US5058044 décrit une concentration d'informations d'état d'un véhicule, issues de divers composants de celui-ci, en vue d'une transaction sécurisée à haute fréquence entre le véhicule et un poste d'entretien de ce véhicule. La lecture des étiquettes est conditionnée par la validité d'un identifiant enregistré en mémoire de cette étiquette.

Le document US20070241908 décrit la gestion de données relatives à l'entretien d'un aéronef, avec des étiquettes électroniques associées à des composants de l'aéronef. Une section de l'aéronef est visualisée, en montrant la localisation à l'intérieur de cette section, des composants ayant une étiquette associée. Un lecteur est apte à lire les données transmises par chacune des étiquettes et une base de données formant mémoire, qui emmagasine des données d'entretien, y inclus celles lues par le lecteur. Une interface utilisateur permet de restituer les données d'entretien à partir de la base de données, et permet la visualisation des données restituées.

Le document US2007115125 décrit la traçabilité d'articles marqués d'étiquettes RFID en conteneurs eux-mêmes regroupés. Un lecteur d'étiquettes RFID et un transpondeur actif sont fixés au conteneur. Pour répondre à une requête d'inventaire, un lecteur de transpondeur actif est positionné à proximité du conteneur pour interagir avec les étiquettes RFID et / ou le transpondeur actif. Une combinaison de lecteur de transpondeur actif et de transpondeur actif peut servir de Proxi pour le lecteur de transpondeur actif positionné à proximité du conteneur.

En pratique, l'application de techniques de traçabilité par étiquettes électroniques au domaine de la gestion de configuration d'un aéronef tel qu'un hélicoptère, soulève des difficultés spécifiques auxquelles les documents cités n'apportent pas de solution satisfaisante.

Ainsi, les techniques actuelles de traçabilité par étiquettes électroniques peuvent être à l'origine de problèmes de sécurité, par exemple du fait que certaines étiquettes électroniques ont une portée de plusieurs mètres voire dizaines de mètres. En conséquence, les signaux radiofréquence qui sont émis par ces étiquettes peuvent être captés à l'insu des personnes autorisées, et risquent ensuite d'être décryptés.

Avec les systèmes connus, sauf à disposer localement d'une installation lourde telle qu'un portique équipé de lecteurs appropriés, la communication avec l'extérieur par exemple pour une consultation de la configuration de l'appareil, est mal pratique au sens où il est difficile d'exciter les étiquettes.

Une alternative aux installations lourdes, par exemple dans le cas d'une consultation sur un théâtre d'action isolé tel qu'une intervention d'urgence en campagne, serait de prévoir un système à étiquettes embarquées à longue portée (typiquement actives), ce qui est antagoniste avec les contraintes de sécurité et de poids auxquelles sont soumis les appareils.

En effet, le poids des systèmes électroniques de traçabilité, dont les étiquettes couplées aux composants, dans un appareil aéronautique sont très pénalisants, voire rédhibitoires à leur emploi.

Par ailleurs, l'environnement spécifique au sein duquel de telles étiquettes doivent communiquer est hautement contraignant, car l'appareil possède des structures intrinsèquement génératrices de brouillages des radiofréquences, en particulier du fait de ses composants métalliques, de ses réservoirs à fluide, de sa connectique et de ses matériels électroniques embarqués.

Du fait de leur portée dans un pareil environnement, la fiabilité de communication des étiquettes usuelles s'avère insatisfaisante.

Dans le même ordre d'idées, les conditions ambiantes de fonctionnement d'étiquettes électroniques couplées à des composants d'appareil, sont extrêmement agressives. En conséquence, la longévité des étiquettes couplées risque de ne pas correspondre à la durée de vie des composants qui peut atteindre par exemple 20 ans ou 6.000 heures de fonctionnement.

Par ailleurs, les normes et réglementations dans un contexte aéronautique sont particulièrement fortes, et les systèmes de traçabilité évoqués doivent en respecter scrupuleusement les injonctions.

De ce qui précède, on comprend que d'une part l'accroissement de la portée des étiquettes embarquées n'est pas souhaitable du point de vue sécuritaire et de la charge utile de l'appareil.

D'autre part, l'emploi d'étiquettes légères et simples pose non seulement des problèmes de lecture (fiabilité, distances, etc.), mais également diminue fortement les possibilités de cryptage et authentification puisque ces étiquettes simples sont limitées voire démunies de processeurs aptes à exécuter des fonctions complexes nécessaires à la sécurité.

Les besoins à satisfaire pour la gestion de configuration obligent donc à dépasser les solutions actuelles qui sont antinomiques.

D'un point de vue conceptuel, en termes logique des systèmes d'information, il est paradoxal dans les propositions actuelles de traçabilité à étiquettes électroniques, que l'appareil soit la référence d'entretien, alors que ce sont les composants tels que les pièces de rechange qui forment le coeur de cet entretien.

Il serait ainsi préférable de permettre à tout moment une interrogation en temps réel des composants couplés à une étiquette du système de traçabilité.

Au-delà des fonctionnalités qui s'avèrent problématiques avec les systèmes de traçabilité évoqués, il serait avantageux de pouvoir combiner à l'entretien et à la logistique aéronautique, des services tels que le suivi des composants élémentaires des appareils quel que soit leur théâtre d'opération, l'optimisation de la planification des entretiens et des vols, la disponibilité (stocks et commandes aux fabricants) de ces composants, tout en assurant la garantie de leur origine afin de lutter contre la contrefaçon.

A cet effet, un exemple de l'invention est un procédé de suivi de configuration d'un appareil, en particulier d'un aéronef tel qu'un hélicoptère, cet appareil comportant une multitude de composants dont on désire consulter et enregistrer diverses données propres en particulier leurs paramètres d'identification/authentification, historique et d'état de fonctionnement.

Ce procédé prévoit une phase préalable d'installation sur des composants de l'appareil, d'une pluralité d'étiquettes électroniques sans fil embarquées, chacune étant couplée et dédiée à un composant particulier.

Puis est prévue une phase de transaction, avec une étape de transfert de données entre l'appareil et une installation externe.

Selon une réalisation de l'invention, la phase d'installation prévoit une étape d'embarquement sur l'appareil d'au moins deux lecteurs locaux, ainsi que d'au moins un routeur sans fil compatible et connecté à un ou plusieurs lecteurs locaux, chaque lecteur local étant compatible et proximal avec un groupe d'étiquettes électroniques embarquées.

Au moins un concentrateur sans fil compatible avec au moins un routeur sans fil est installé et configuré lors de l'étape d'embarquement, pour communiquer d'une part avec ce routeur au moins et d'autre part avec l'installation externe.

Ainsi, lors de l'étape de transfert, l'installation externe communique exclusivement avec le concentrateur sans fil, cette communication transitant au sein de l'appareil entre au moins un noeud de base qui relie sans fil un groupe d'étiquettes à leur lecteur local, via une trame intermédiaire qui relie sans fil ce lecteur local à un routeur au moins, et une maille embarquée terminale qui relie ce rouleur au concentrateur, ces noeud, trame et maille embarquées formant un maillage sans fil.

Les étiquettes électroniques sont aptes à communiquer exclusivement au sein de leur noeud, avec un lecteur local proximal, tandis que le routeur embarqué est apte à communiquer exclusivement au sein de sa maille avec le concentrateur compatible, notamment lors de la phase de transaction.

Selon une caractéristique, lors de la phase d'installation, le maillage sans fil est configuré, notamment en termes de portée et de protocole de communication sans fil, pour définir autour de l'appareil, un périmètre de secret sensiblement confondu avec une enveloppe externe de l'appareil ou au moins proche de cette enveloppe, périmètre en dehors duquel aucune lecture ou écriture des étiquettes électroniques n'est possible.

Selon une autre caractéristique, lors de la phase d'installation, chaque noeud sans fil est configuré pour que ses étiquettes électroniques soient couplées à des composants formant un secteur fonctionnel de l'appareil.

Selon encore une caractéristique, la phase de transaction et en particulier son étape de transfert, est effectuée de manière sécurisée, automatique et régulière en particulier lors de toute utilisation ou entretien de l'appareil. Notamment, l'étape de transaction est opérée à intervalles réguliers, déterminés en fonction de la programmation d'une temporisation embarquée, ou à l'issue d'une utilisation ou d'un entretien de l'appareil. Par exemple, un détecteur d'état de l'appareil (e.g. d'atterrissage sur un aéronef) est logiquement couplé à la maille du concentrateur de manière qu'un état donné déclenche la phase de transaction.

En outre ou alternativement, la phase de transaction peut aussi être déclenchée manuellement ou à la demande, en particulier depuis l'installation externe ou à partir d'une commande de bord dédiée.

Lors de la phase de transaction, les données propres sont transmises depuis les étiquettes électroniques ou mises à jour à partir du concentrateur notamment, avec au moins une étape de coordination entre plusieurs noeuds et/ou et au moins une étape de filtrage de ces données propres.

Selon une caractéristique, les communications sans fil au sein du noeud, de la trame et de la maille emploient la gamme des Ultra Haute Fréquences (UHF), notamment du type Réseau sans fil à dimensions Personnelles (Wireless Personal area Networks, i.e. WPAN) éventuellement à faible débit (Low Rate WPAN, i.e. LR WPAN).

Ces communications sont donc des liaisons radio sécurisées, par exemple conformes au protocole Zigbee (voir le site Internet : http://www.zigbee.org) basé sur la norme IEEE802.15.4 (voir le site Internet : http://standards.ieee.org/getieee802/index.html).

Un autre exemple de l'invention vise un système automatisé de suivi de configuration d'un appareil, apte à mettre en oeuvre le procédé évoqué plus haut.

Ce système comporte une installation externe à l'appareil, avec un outil de suivi, et sur l'appareil au moins, une pluralité d'étiquettes électroniques sans fil, chacune couplée à un composant de l'appareil, au moins un lecteur local pour former avec un groupe d'étiquettes électroniques un noeud de base, au moins un routeur proximal pour former une trame intermédiaire avec un lecteur local, au moins un concentrateur embarqué pour former une maille terminale d'un maillage sécuritaire sans fil, via lequel maillage des données propres aux composants sont transmises entre les étiquettes et l'installation extérieure.

Encore un autre exemple de l'invention est un appareil et en particulier un aéronef tel qu'un hélicoptère, apte à mettre en oeuvre le procédé évoqué plus haut.

Selon l'invention, un périmètre de secret est sensiblement confondu avec une enveloppe externe de l'appareil ou est au moins proche de cette enveloppe, en dehors de ce périmètre aucune lecture ou écriture des étiquettes électroniques de l'appareil n'est possible.

Dans une réalisation, l'appareil est divisé en secteurs fonctionnels au sein de chacun desquels secteurs est agencé un groupe d'étiquettes électroniques, au moins un secteur fonctionnel vital comportant une ou plusieurs étiquettes actives tandis que les autres secteurs de l'appareil comportent exclusivement des étiquettes passives ou semi-actives c'est-à-dire où une alimentation autonome ne fournit d'énergie qu'à une puce de l'étiquette sans fournir d'énergie pour la communication sans fil.

Dans une réalisation, le système de suivi est relié à une source d'alimentation basse consommation, en particulier cette source d'alimentation comporte au moins une batterie et un dispositif piézoélectrique de chargement en énergie de cette batterie.

Dans une réalisation, le système de suivi présente au moins une gamme de fréquences de communication, qui est distincte de toutes les autres gammes de fréquences de l'électronique employées par l'appareil.

Mais d'autres spécificités et avantages de l'invention ressortent de la description détaillée qui suit et se réfère aux dessins annexés.

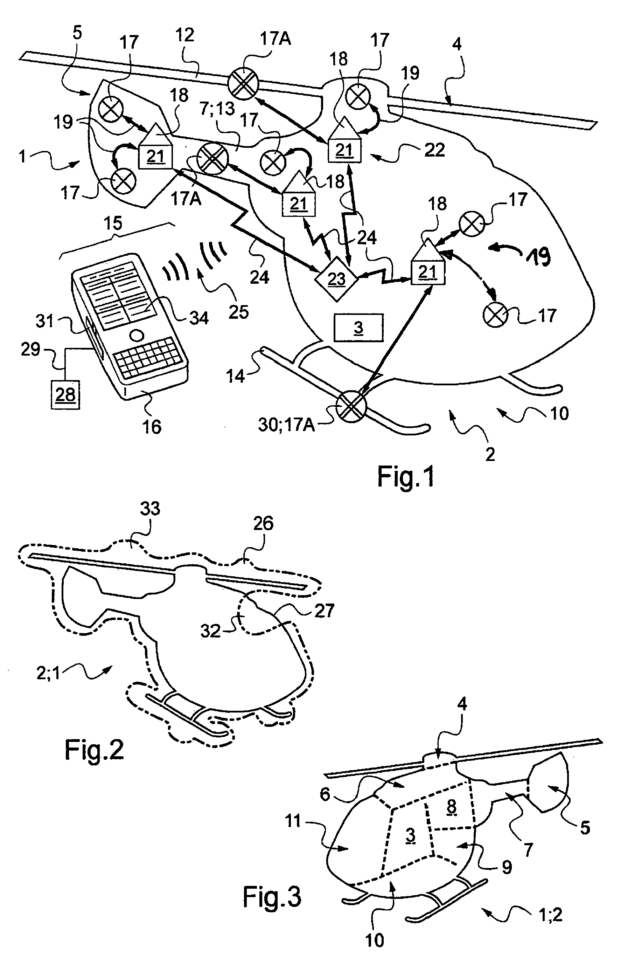

Dans ces dessins, la figure 1 est une vue schématique en perspective d'un appareil équipé d'un système automatisé de suivi de configuration selon l'invention, et d'une installation externe portable à outil de suivi.

La figure 2 est une vue schématique d'un appareil conforme à l'invention, avec un périmètre de secret qui épouse sensiblement le contour externe de l'appareil.

La figure 3 est également une vue en perspective d'un appareil conforme à l'invention, où sont schématiquement représentés des secteurs fonctionnels.

Sur la figure 1, la référence numérique 1 désigne de manière générale un appareil 1, ici un hélicoptère. Bien sûr, ce type d'appareil 1 n'est qu'un exemple et d'autres types d'appareils soumis aux mêmes contraintes en termes de suivi de configuration, tels que des aéronefs ou autres véhicules militaires ou civils, sont visés également par l'invention.

Cet appareil 1 possède un nombre considérable de composants, comme par exemple la partie embarquée d'un système de suivi de configuration 2 dont les structures et procédés de fonctionnement seront décrits ci-après.

On a représenté schématiquement par la référence numérique 3, un agencement électronique embarqué de l'appareil 1. Cet agencement électronique 3 comporte des groupes fonctionnels assurant notamment l'alimentation en courant électrique, la radiocommunication et la radionavigation de l'appareil 1.

Par ailleurs (voir figure 3), l'appareil 1 comporte des secteurs fonctionnels qui correspondent fréquemment à des groupes fonctionnels, comme par exemple le groupe fonctionnel rotor principal 4 (plus simplement dit groupe 4), le groupe fonctionnel rotor anti-couple 5 (groupe 5), le groupe fonctionnel boîte de transmission principale (BTP) 6 (groupe 6), le groupe fonctionnel poutre arrière 7 (groupe 7), le groupe fonctionnel turbines 8 (groupe 8), le groupe fonctionnel réservoirs et fluides 9 (groupe 9), le groupe fonctionnel structure et atterrisseurs 10 (groupe 10), le groupe fonctionnel poste de pilotage 11 (groupe 11).

Au sein du groupe fonctionnel rotor principal 4, une pale de rotor 12 est considérée comme un composant vital de l'appareil 1. De même, au sein du groupe fonctionnel poutre arrière 7, une structure porteuse 13 est considérée comme un composant vital de l'appareil 1. Un patin 14 d'atterrissage du groupe fonctionnel 10 structure et atterrisseurs 10, est aussi considéré comme un composant vital de l'appareil 1.

Ceci étant exposé, le système 2 de suivi de configuration de l'appareil 1 est décrit ci-après en se reportant à la figure 1, conformément à l'invention.

Ce système 2 comporte une installation 15 externe à l'appareil 1, avec un ou plusieurs outils de suivi, tels que celui qui est désigné par la référence numérique 16.

L'outil de suivi 16 est ici un ordinateur de poche. Par exemple, un mode de réalisation prévoit que cet outil 16 est un ordinateur de poche du type HP iPAQ nx2490 dont les données techniques sont exposées par exemple sur le site Internet : http://www.hp.com/eur/handhelds.

Sur l'appareil 1, le système 2 inclut une pluralité d'étiquettes électroniques sans fil désignées par la référence numérique générale 17. Chacune de ces étiquettes 17 est couplée à un composant de l'appareil 1 dont on désire pouvoir assurer le suivi.

Sur la figure 1, les étiquettes (ou transpondeurs) de type actives sont désignées en 17A.

En effet, divers types de transpondeurs 17 sont utilisés avec l'invention, à savoir :
- les transpondeurs actifs 17A qui contiennent une batterie interne permettant à la puce d'être alimentée et de diffuser un signal à destination d'un lecteur 18. La disponibilité du signal d'un tel transpondeur 17A est permanente à e.g. 30 mètres. La force du signal du transpondeur 17A est élevée, mais par contre la force du signal requise par le lecteur 18 est très faible ;
- les transpondeurs passifs 17, qui n'ont pas de batterie, la source d'alimentation étant tirée des ondes radio, le fonctionnement de la puce dépend donc de celui d'un lecteur 18, La disponibilité du transpondeur 17 est limitée au champ d'émission du lecteur 18 qui est moins de e.g. 3 mètres. La force du signal du transpondeur 17 est faible. À l'inverse d'un transpondeur actif 17A, la force du signal requise par le lecteur 18 pour une étiquette passive 17 est très élevée ;
- les transpondeurs semi-actifs, également désignés en 17, qui contiennent une batterie pour le fonctionnement de leur puce. L'énergie pour l'émission des ondes radio est fournie par un lecteur 18. La disponibilité du signal du transpondeur est limitée au champ de ce lecteur 18. La force du signal du transpondeur ainsi que la force du signal requise par le lecteur 18 sont faibles.

Le choix du type d'étiquette (passif, semi-actif ou actif) pour le suivi d'un constituant donné de l'appareil 1 peut être déterminé en fonction notamment de paramètres tels que :
- l'accessibilité de ce constituant, sachant que les étiquettes nécessitant le moins d'interventions et ayant une durée de vie supérieure sont par exemple choisies pour les constituants à accès difficile ;
- l'environnement de ce constituant, sachant que les étiquettes ayant les capacités d'émission et réception les plus élevées sont par exemple choisies pour les constituants dont l'environnement trouble ces capacités ;
- la proximité d'emplacement possible pour le lecteur dédié à la communication avec une étiquette, sachant que les étiquettes ayant les portées les plus élevées sont par exemple choisies pour les constituants dont le lecteur dédié est le plus éloigné ;
- etc.

Sur la figure 1, les étiquettes 17A actives sont couplées à des composants vitaux de l'appareil 1, ici les pales 12 du rotor principal du groupe 4, la structure 13 du groupe 7 et les patins 14 du groupe 10.

Pour les transpondeurs 17 et 17A nécessitant une alimentation distincte de la source d'ondes par laquelle ils communiquent, ainsi pour d'autres constituants du système 2 ayant besoin d'une alimentation par exemple intégrée à leur structure propre, ces constituants et/ou transpondeurs sont équipés ou reliés à des dispositifs 30 de chargement en énergie.

Sur la figure 1, un tel dispositif 30 est intégré au transpondeur 17A du patin 14 du groupe 10, et comporte un dispositif piézoélectrique de production de courant, qui alimente une batterie ou un accumulateur analogue de ce transpondeur 17A.

Comme indiqué ci-dessus, le système 2 comporte au sein de l'appareil 1, au moins un lecteur 18 local, c'est-à-dire embarqué et dédié à l'enregistrement et /ou lecture d'un ou de plusieurs transpondeurs (actifs, semi-actifs ou passifs).

Typiquement, chaque lecteur embarqué 18 est localisé à proximité ou dans un secteur fonctionnel / groupe fonctionnel auquel il est dédié. Sur la figure 1 par exemple, le lecteur 18 situé le plus à gauche est disposé au sein du groupe fonctionnel 5 rotor anti-couple, et se charge localement des échanges ou communications avec les transpondeurs 17 de ce groupe.

Ainsi, un ensemble d'étiquettes électroniques 17 (par exemple celui du groupe 5, sur la figure 1), forme l'un des noeuds 19 à la base d'un maillage conforme à l'invention.

Toujours au sein de l'appareil 1, le système 2 comporte au moins un routeur 21 proximal, c'est-à-dire embarqué et dédié à la transmission interne à l'appareil 1 des enregistrements et /ou lectures d'un ou de plusieurs transpondeurs 17 (actifs, semi-actifs ou passifs).

Comme pour les lecteurs 18, chaque routeur 21 embarqué est localisé à proximité ou dans un secteur fonctionnel / groupe fonctionnel auquel il est dédié, pour former une trame 22 intermédiaire sans fil (dont une seule est représentée sur la figure 1, à proximité de la pale 12 du groupe 4) avec un lecteur local 18.

Egalement, le système 2 présente au moins un concentrateur 23. Un tel concentrateur 23 reconnaît les différents objets sans fil (transpondeurs 17, lecteurs 18, etc.) connectés sur son réseau local sans fil.

En recevant une information par exemple d'un lecteur proximal 18, le concentrateur 23 dédié décode l'entête de cette information pour en connaître le destinataire et ne l'envoie que vers les objets sans fils prévus. Ceci réduit le trafic sur le réseau complet.

En effet, un concentrateur 23 travaille sur des niveaux correspondant à la couche réseau du modèle OSI (modèle d'interconnexion en réseau des systèmes ouverts de l'ISO, organisation internationale de normalisation). Par analogie, on pourrait dire que les transpondeurs 17 travaillent au niveau de la couche physique, et les lecteurs 18 à celui de la couche de liaison du modèle OSI

Le concentrateur 23 embarqué forme avec les routeurs 21 une maille 24 terminale d'un maillage sécuritaire sans fil, via lequel maillage des données propres aux composants sont transmises entre les étiquettes 17 et l'installation 15 (partie extérieure à l'appareil 1 du système 2).

Cette transmission externe, illustrée en 25 sur la figure 1, est exposée ci-après.

Sur la figure 2 on voit un périmètre 26 de secret selon l'invention, qui est représenté par des traits et point alternés.

Ce périmètre 26 est sensiblement confondu avec une enveloppe 27 (en traits pleins) externe de l'appareil 1 ou est au moins proche de cette enveloppe 27.

En dehors de ce périmètre 26 aucune lecture ou écriture sans fil non autorisée, à l'exception bien sûr des transactions 25 autorisées, n'est possible. Notamment, le système 2 est configuré pour interdire les transactions directes depuis l'extérieur, avec les des étiquettes électroniques 17. Les transactions 25 avec l'installation externe 15 transitent donc par le concentrateur 23.

Par ailleurs, le maillage embarqué et en particulier les mailles 24 permettent d'obtenir un shunt sécuritaire grâce auquel les données issues des transpondeurs 17 peuvent être transmises et vérifiées (contrôle d'intégrité des données).

Le fait que le périmètre 26 et l'enveloppe physique 27 de l'appareil 1 soient extrêmement proches est rendu possible grâce au maillage sans fil « embarqué » (noeud 19, trame 22 et maille terminale 24) exposé précédemment. Ceci limite les risques d'espionnage et permet un suivi de configuration sans installation complexe, par exemple sur un théâtre d'opération de l'appareil 1 qui est éloigné d'infrastructures lourdes.

Cependant, les données collectées depuis le concentrateur 23, via la transmission 25 et par l'outil 16 peuvent après collecte être aisément fournies et utilisées hors du système 2. Par exemple, la référence numérique 28 sur la figure 1 représente une station au sol, qui peut recevoir et traiter les données issues du système 2 via une liaison 29 filaire ou sans fil.

Typiquement, une telle station 28 relie l'installation 15 et diverses interfaces vers les industriels impliqués dans la fabrication ou l'entretien de l'appareil 1, des instances en charge d'une flotte dont l'appareil 1 fait partie, des organismes en charge de la documentation technique relative à l'appareil 1, etc.

Un autre aspect sécuritaire de l'invention est que le système 2 de suivi est configuré pour que les communications soient effectuées à des gammes de fréquences distinctes de toutes celles employées par l'agencement 3 de l'appareil 1.

Ainsi, les communications sans fil au sein des noeuds 19, des trames 22 et des mailles 24 emploient la gamme des Ultra Haute Fréquences (UHF), notamment du type Réseau sans fil à dimensions Personnelles (Wireless Personal area Networks, i.e. WPAN) éventuellement à faible débit (Low Rate WPAN, i.e. LR WPAN).

Ces communications sont donc des liaisons radio sécurisées, par exemple conformes au protocole Zigbee (voir le site Internet : http://www.zigbee.org) basé sur la norme IEEE802.15.4 (voir le site Internet : http://standards.ieee.org/getieee802/index.html).

Sur la figure 1, les transmissions 25 entre l'installation 15 et l'appareil 1 sont également conforme à ce protocole.

Mais des réalisations prévoient que par exemple les communications entre les transpondeurs passifs 17 et leurs lecteurs 18 communiquent à une fréquence de l'ordre de 869 MHz, tandis que les transpondeurs actifs 17A communiquent à une fréquence de l'ordre de 2,4 GHz.

Selon les cas, les transpondeurs passifs 17 ont des lecteurs 18 dédiés, distincts des lecteurs 18 en charge des communications avec les transpondeurs actifs 17A. Alternativement, des lecteurs communs assurent les lectures et enregistrements des transpondeur 17 passifs ou actifs.

Les principaux aspects matériels de l'invention ayant été présentés, c'est le procédé de suivi de configuration qui est décrit ci-après.

On désire avec ce procédé, consulter et enregistrer autant que faire se peut automatiquement, diverses données propres aux composants de l'appareil 1, en particulier leurs paramètres d'identification/authentification, historique et d'état de fonctionnement.

Ce procédé prévoit une phase préalable d'installation sur des composants de l'appareil 1, d'une pluralité d'étiquettes électroniques 17 sans fil embarquées, chacune étant couplée et dédiée à un composant particulier.

Puis est prévue une phase de transaction, avec une étape de transfert de données entre l'appareil 1 et l'installation externe 15.

Par ailleurs, la phase d'installation prévoit une étape d'embarquement sur l'appareil 1 des lecteurs 18 locaux, ainsi que des routeurs 21 sans fil compatibles et connectés à un ou plusieurs lecteurs locaux 18.

Comme évoqué, chaque lecteur local 18 est compatible et proximal avec un groupe (4-11) d'étiquettes électroniques embarquées.

Le concentrateur sans fil 23 étant compatible avec ces routeurs 21, celui-ci est installé et configuré lors de l'étape d'embarquement, pour communiquer d'une part avec ces routeurs 21 et d'autre part avec l'installation externe 15.

On a vu que la transmission 25 sans fil assure cette communication. Une réalisation non représentée prévoit que le concentrateur 23 est pourvu d'une baie de réception de cartes de transfert ou analogues (clés USB, cartes à mémoire, disques optiques, etc.) Sur la figure 1, l'outil 16 possède d'ailleurs lui aussi une baie 31 de réception d'une telle carte de transfert.

Donc, sauf lorsque des données sont inscrites via un support physique, lors de l'étape de transfert sans fil, l'installation 15 communique exclusivement avec le concentrateur 23.

Cette communication sans fil transite au sein de l'appareil 1 entre au moins les noeuds 19, via une trame intermédiaire 22 et une maille terminale 24 qui relie ces routeurs 21 au concentrateur 23, c'est-à-dire par maillage sans fil.

Pour des questions de sécurité en particulier, les étiquettes 17 embarquées dans l'appareil 1 sont aptes à communiquer exclusivement au sein de leur noeud 19, avec un ou plusieurs lecteurs 21 locaux et proximaux.

Les routeurs 21 sont aptes à communiquer exclusivement au sein des mailles 24 avec le concentrateur 23, notamment lors de la phase de transaction.

En amont, lors de la phase d'installation, le maillage sans fil est évidemment configuré, notamment en termes de portée et de protocole de communication sans fil, pour définir autour de l'appareil 1 le périmètre 26 de secret qui est sensiblement confondu avec une enveloppe externe 27.

Sur la figure 2, ce périmètre 26 comporte des zones 32 et 33. La zone 32 est étendue à l'intérieur de l'enveloppe 27 (ici, dans une cabine de l'aéronef 1), mais hors du périmètre 26. En d'autres termes, cette zone 32 est volontairement soustraite au périmètre 26 pour que des passagers de l'appareil 1 ne puissent pas accéder aux données du système 2.

Quant à la zone 33, celle-ci constitue une protubérance de la portée de certains transpondeurs 17 par exemple actifs.

Lors de la phase d'installation, chaque noeud 19 sans fil est configuré pour que ses étiquettes 17 soient couplées à des composants formant un secteur ou groupe fonctionnel de l'appareil 1.

La phase de transaction du procédé, et en particulier son étape de transfert, est effectuée de manière sécurisée.

Pour illustrer ce point, prenons l'exemple d'une Fiche FME couplée à un calculateur de l'agencement 3 de l'appareil 1.

Une telle Fiche se présente à un instant donné comme suit (Tableau 1):

**(Tableau 1)**

| Fiche Matricule Equipement | | | |
|---|---|---|---|
| (Identification du matériel) | | Garantie | |
| Fiche N° | 2 | Matériel | |
| Dénomination | Calculateur | Date de livraison | |
| Nomenclature OTAN | | Durée de garantie au stockage | |
| Référence constructeur | 03B2012FR | Date Mise en Service | |
| Référence fabricant | URL210 | Durée garantie fonctionnement | |
| Configuration de livraison | | | |
| N° série | 5012 | | |
| Fabricant | FA18 | | |
| Code OTAN | | | |
| Version | | | |

| Amendements | | | |
|---|---|---|---|
| Type | | Renseignements particuliers | |
| Marché ou commande | | Date dernière révision | 01/08/2005 |
| Référence | | Type de visite | 750h |
| Organisme émetteur | | Heure de vol | 1200h |
| Fournisseur | | Heure de fonctionnement à la dépose | 1350h |
| Date | | Heure de fonctionnement à la pose | 1355h |
| N° du lot | | Date de la dépose | 01/08/2005 |
| Adresse | | Date de la pose | 01/09/2005 |

Si une mise à jour des données s'avère nécessaire, par exemple sur sollicitation d'un opérateur de maintenance, celui-ci interroge par exemple avec l'outil 16, le concentrateur 23. On parle ici d'interrogation manuelle.

Ce concentrateur 23 qui possède une mémoire propre, y a enregistré les réponses à diverses requêtes émises vers les transpondeurs 17 et fournies via le maillage sans fil embarqué.

Alors, une base de données propre à l'appareil 1 est lue dans la mémoire du concentrateur 23, et présente l'apparence suivante :

**(Tableau 2)**

| Base de données de l'appareil Configuration Matérielle & Logicielle des équipements embarqués Soumis à des intervalles prescrits d'entretien | | | |
|---|---|---|---|
| (Identification du matériel) | | Renseignements particuliers | |
| Equipement N° | N | Equipement neuf | NON |
| Dénomination | Calculateur PA | Date dernière révision | 01/08/2005 |
| Nomenclature OTAN | | Type de visite | 750h |
| Référence constructeur | 03B2012FR | Heure de vol | 1200h |
| Référence fabricant | URL210 | Heure de fonctionnement à la dépose | 1350h |
| Version logiciel | V 5.2 | Heure de fonctionnement à la pose | 1355h |
| Version application | V 4.2 | Date de la dépose | 01/08/2005 |
| N° série | 512 | Date de la pose | 01/09/2005 |
| fabriquant | FA18 | | |

En prenant l'exemple du nombre d'heures de vol d'un appareil 1, si le dernier vol a duré 2 heures, alors les champs correspondants dans les Fiches FME et dans la base de données de l'appareil 1 ressortent comme suit (Tableaux 3 et 4).

On souligne bien ici que dans ce contexte, l'ensemble des fiches FME de l'appareil 1 qui correspondent à des composants auxquels sont couplés des transpondeurs 17, sont mises à jour de cette façon (Heures de vol = 1200 + 2 = 1202 heures).

Par exemple, une telle mise à jour est le fruit d'une sollicitation par un opérateur de maintenance, soit est déclenchée automatiquement par exemple au posé de l'appareil 1.

En se reportant à la figure 1, comme l'outil de suivi 16 comporte un affichage 34 tel qu'un écran à cristaux liquides, les fiches FME peuvent être affichées sur cet écran 34, sensiblement telles qu'elles apparaissent dans les tableaux 1 et 3 par exemple. Le concentrateur 23 joue donc également ici un rôle de coordination des constituants du système 2, et des données qui en sont issues.

**(Tableau 3)**

| Fiche Matricule Equipement | | | |
|---|---|---|---|
| (Identification du matériel) | | Garantie | |
| Fiche N° | 2 | Matériel | |
| Dénomination | Calculateur | Date de livraison | |
| Nomenclature OTAN | | Durée de garantie au stockage | |
| Référence constructeur | 03B2012FR | Date Mise en Service | |
| Référence fabricant | URL210 | Durée garantie fonctionnement | |
| Configuration de livraison | | | |
| N° série | 5012 | | |
| Fabricant | FA18 | | |
| Code OTAN | | | |
| Version | | | |
| Amendements | | | |
| Type | | Renseignements particuliers | |
| Marché ou commande | | Date dernière révision | 01/08/2005 |
| Référence | | Type de visite | 750h |
| Organisme émetteur | | Heure de vol | 1202h |
| Fournisseur | | Heure de fonctionnement à la dépose | 1350h |
| Date | | Heure de fonctionnement à la pose | 1355h |
| N° du lot | | Date de la dépose | 0110812005 |
| Adresse | | Date de la pose | 0110912005 |

**(Tableau 4)**

| Base de données de l'appareil Configuration Matérielle & Logicielle des équipements embarqués Soumis à des intervalles prescrits d'entretien | | | |
|---|---|---|---|
| (Identification du matériel) | | Renseignements particuliers | |
| Equipement N° | N | Equipement neuf | NON |
| Dénomination | Calculateur PA | Date dernière révision | 01/08/2005 |
| Nomenclature OTAN | | Type de visite | 750h |
| Référence constructeur | 0382012FR | Heure de vol | 1202h |
| Référence fabricant | URL210 | Heure de fonctionnement à la dépose | 1350h |
| Version logiciel | V 5.2 | Heure de fonctionnement à la pose | 1355h |
| Version application | V 4.2 | Date de la dépose | 01/08/2005 |
| N° série | 512 | Date de la pose | 01/09/2005 |
| fabriquant | FA18 | | |

De ce qui précède, on comprend pourquoi le procédé de l'invention est désigné comme étant automatique. A un emplacement pratique de l'appareil 1, est prévu selon certaines réalisations, un commutateur entre des modes de fonctionnement manuel et automatique du système 2.

En effet, la collecte de données depuis le système 2 peut aussi être régulière, en particulier lors de toute utilisation ou entretien de l'appareil 1. Notamment, l'étape de transaction est opérée à intervalles réguliers, déterminés en fonction de la programmation d'une temporisation embarquée, ou à l'issue d'une utilisation ou d'un entretien de l'appareil 1.

Par exemple, un détecteur intégré à l'appareil 1 (par exemple au sein d'un transpondeur 17A intégrant un capteur approprié) d'état de l'appareil 1, émet des signaux synonymes d'un atterrissage.

Si le transpondeur 17A en question est couplé logiquement à la maille du concentrateur 23, un état donné (atterrissage) déclenche la phase de transaction du procédé de l'invention.

En synthèse, la phase de transaction peut être déclenchée automatiquement, manuellement ou à la demande, en particulier depuis l'installation 15 ou à partir d'une commande de bord dédiée.

Lors de la phase de transaction, les données propres sont transmises depuis les étiquettes 17 ou mises à jour à partir du concentrateur 23 notamment, avec au moins une étape de coordination entre plusieurs noeuds et/ou et au moins une étape de filtrage de ces données propres. La comparaison des Tableaux 1 et 2, dont les données de l'un sont issues de l'autre, montre bien le type de filtrage qui est opéré.

Si un remplacement d'équipement ou composant de l'appareil 1 est effectué, les tableaux 1 et 2 seront modifiés pour indiquer de nouvelles valeurs (Tableau 5).

**(Tableau 5)**

| Base de données de l'appareil Configuration Matérielle & Logicielle des équipements embarqués Soumis à des intervalles prescrits d'entretien | | | |
|---|---|---|---|
| (Identification du matériel) | | Renseignements particuliers | |
| Equipement N° | N | Equipement neuf | oui |
| Dénomination | Calculateur PA | Date dernière révision | |
| Nomenclature OTAN | | Type de visite | |
| Référence constructeur | 03B2012FR | Heure de vol | |
| Référence fabricant | URL210 | Heure de fonctionnement à la dépose | 0h |
| Version logiciel | V 5.2 | Heure de fonctionnement à la pose | 0h |
| Version application | V 4.2 | | |
| N° série | 0001 | | |
| fabriquant | FA18 | | |

Comme on l'a vu, l'invention vise l'intégration de la technologie RFID et d'un réseau maillé sans fil dans un hélicoptère pour assurer une gestion de configuration appareil.

L'innovation s'applique donc dans le domaine de la maintenance et de la logistique des pièces de rechanges dans l'aéronautique. Grâce à la technique RFID, un but est de pouvoir assurer un suivi individualisé des pièces à bord d'un aéronef, pour permettre à l'industrie aéronautique de proposer des solutions nouvelles de soutien en service aux exploitants aéronautiques.

Les récents progrès réalisés par la miniaturisation des systèmes électroniques, ainsi que dans l'acquisition et de stockage de données, ouvrent des perspectives intéressantes et inédites de suivi de données des pièces mécaniques et électroniques embarquées.

Les avantages attendus concernent :
* la mise en place de nouveaux services grâce à l'invention :
   - du suivi des potentiels des pièces élémentaires des machines en « temps réel », y compris sur les théâtres d'opération éloignés ;
   - de l'optimisation de la planification des tâches de maintenance, tous niveaux, et par conséquent de l'optimisation de la planification des vols ;
   - de l'optimisation de la planification des stocks en fonction des potentiels de chaque pièce suivis en « temps réel» ;
   - de l'optimisation des commandes et de la fabrication des pièces de rechange (notamment pour les exploitants d'hélicoptères à l'heure de vol) ;
   - de l'optimisation de la disponibilité opérationnelle ;
   - de la garantie de l'origine des pièces par des mesures de lutte contre la contrefaçon.
* la définition de technologies spécifiques par :
   - la fabrication de transpondeurs, de lecteurs et d'un concentrateur aux performances accrues pour répondre aux besoins de l'invention ;
   - de conditionnements pour les transpondeurs (dits « packagings ») qui soient robustes, pour répondre aux exigences environnementales aéronautiques sévères ;
   - des moyens dédiés à la sécurisation des données, à la certification et à l'authentification des produits ;
   - la lecture/écriture de transpondeurs entre 5 et 10m et dans en environnement contraignant (métal, fluide...) ;

Ceci n'était pas possible avec les systèmes anciens de traçabilité. Notamment, l'invention permet de nombreuses fonctionnalités supplémentaires, contrairement au suivi individualisé des pièces par la FME (Fiche Matricule Equipement = fiche papier). Avec ces fiches, on l'a vu, le suivi était manuel et effectué par des opérateurs de maintenance, des bureaux techniques et des équipementiers.

Les éléments de traçabilité des pièces dans l'aéronautique sont actuellement en majorité des codes barres, des numéros gravés ou des étiquettes rivetées ou non, répertoriant le numéro de série, la référence fabricant et d'autres données, qui sont falsifiables et de lecture délicate (la lecture de ces moyens se fait à très courte distance) et nécessite souvent du démontage dans le cas des zones inaccessibles.

La FME n'est pas pilotée en dynamique par des systèmes embarqués intelligents : c'est le pilote qui à ce jour valide les heures de vol ou les nombres de cycles effectués par l'intermédiaire d'un document officiel. Le report de ces données est reporté soit sur une base de données externe à l'aéronef, gérant toutes les FME dudit aéronef, soit directement sur la FME après dépose d'un équipement en panne ou soumis à révision.

Par contraste, l'invention permet d'accéder aux fonctionnalités suivantes. En utilisant une étiquette électronique de type RFID, il est possible d'obtenir une sorte de FME électronique :
Avec celle-ci, chaque pièce (mécanique ou électronique) soumise à un suivi de potentiel et de tâches de maintenance (PRE) est marquée à l'aide d'une étiquette électronique selon l'invention, qui est collée et lisible à distance par l'intermédiaire d'un lecteur (objectif : jusqu'à 10 mètres de distance en lecture / écriture).

Cette puce contient des informations de maintenance et d'usage de la pièce depuis sa fabrication jusqu'à son utilisation finale (correspondant à sa limite de vie en heures, en calendaires ou en cycles) ; et ce, quelle que soit l'appareil (hélicoptère) sur lequel elle est montée.

Pour mémoire, rappelons ici que des gammes usuelles de fréquences de fonctionnement des transpondeurs sont :
- les fréquences de 125 kHz et 134,2 kHz (transpondeurs passifs) ;
- la fréquence de 13.56 MHz (transpondeurs passifs) ;
- la bande de fréquence allant de 860 à 960 MHz (UHF, ultra haute fréquence) (transpondeurs passifs, transpondeurs actifs) ;
- la bande de fréquence allant de 2.4 à 2.56 GHz (transpondeurs passifs, semi actifs, actifs).

Par ailleurs, les informations de suivi contenues dans la puce RFID peuvent avec l'invention être mises à jour de manière dynamique, à la fin de chaque vol, par l'intermédiaire d'un réseau sans fil comprenant des lecteurs de transpondeurs passifs et semi actifs.

Ainsi, chaque puce contient sa durée cumulée d'utilisation, les opérations de maintenance qu'elle a subie, sa configuration (N° de série, référence fabricant de la pièce, version de logiciel embarqué, etc.).

Pour plus de détails, l'invention recourt à plusieurs idées qu'elle combine avantageusement :
- l'utilisation de la technologie RFID pour le suivi de la traçabilité de pièces ;
- l'intégration dans un transpondeur RFID de données d'identification et de maintenance d'une pièce mécanique ou électronique (notamment celles contenues à ce jour dans la FME) ;
- l'intégration dans ce transpondeur RFID de données d'authentification du constructeur, pour permettre de lutter contre la contrefaçon de pièces détachées et de rechange.
- l'utilisation d'un ou plusieurs protocoles de communication sans fils qui soient sécurisés, pour permettre le transfert des données montantes et descendantes (depuis les transpondeurs vers les lecteurs et inversement) ;
- la possibilité de centraliser certaines données de maintenance des transpondeurs (et donc des pièces) dans un concentrateur embarqué via les lecteurs / routeurs ;
- le transfert des données du concentrateur vers un outil de suivi au sol, ou encore vers un autre équipement embarqué à bord, par liaison numérique ou série.

Pour les mises à jour données et de la base de données, on peut proposer avec l'invention diverses formules. Ainsi, l'adaptation de l'application au besoin de l'aéronautique nécessite des avancées technologiques suivantes :
- compatibilité des étiquettes électroniques aux matériaux embarqués dans l'appareil 1 et de son environnement (conditionnement dit « packaging », collage au composant à suivre, tenue aux polluants, etc.) ;
- sécurisation des données de maintenance intégrées dans les étiquettes, contre la contrefaçon et le piratage ;
- fiabilisation de la mise à jour des données de maintenance montantes ou descendantes ;
- adaptation de la technologie RFID et UHF en regard des exigences environnementales (températures, vibrations, chocs, tenue au crash, etc.) et des exigences électromagnétiques de l'aéronautique ;
- développement d'un concentrateur embarqué spécifique, intégrant par exemple les fonctions de coordinateur réseau et centralisateur des données de maintenance ;
- développement de lecteurs de transpondeurs passifs et semi actifs, par exemple faisant également fonction de routeur ;
- développement d'un protocole de communications entre concentrateur, lecteurs et transpondeurs sécurisés (e.g. avec authentification et/ou cryptage) ;
- adaptation de l'alimentation électrique du concentrateur et/ou des lecteurs au réseau de bord des aéronefs et aux contraintes de durée de vie des batteries déterminées par les exigences de maintenance ;
- développer des modules RF et des lecteurs UHF « basse consommation » en concevant des structures spécifiques pour la recharge des batteries (par exemple un dispositif piézoélectrique) ;
- adapter les fréquences de fonctionnement UHF du réseau maillé, en particulier les lecteurs, en regard des gammes de fréquences non déjà utilisées en aéronautique (pas de pollution ou interférences permises avec les radiocommunications ou radionavigation embarquées) ; cependant, en raison des contraintes de tels systèmes embarqués à bord d'aéronefs, et afin d'éviter toute perturbation électromagnétique néfaste au fonctionnement d'un aéronef complet ; la mise en oeuvre du procédé suivant l'invention ne pourra éventuellement s'effectuer qu'au sol, moteurs à l'arrêt et tout le système de radiocommunication et / ou radionavigation à l'arrêt, excepté le réseau de bord. Néanmoins, l'invention doit être opérationnelle et accessible avec ou sans le soutien de ce réseau de bord, les équipements essentiels au bon fonctionnement de ce procédé pouvant disposer de leur propre alimentation en énergie (par exemple batterie) individuelle.
- adapter également les fréquences UHF des lecteurs en regard des réglementations internationales pour permettre d'adapter l'invention dans tous les pays.

D'ores et déjà, l'invention est à même de fournir les avantages suivants :
- la configuration complète et précise d'un aéronef (matérielle et logicielle) est consultable à tout moment, en tout lieu et en temps réel avec un outil adapté qui interroge la base de données ou un équipement ciblé.
- chaque pièce peut être suivie individuellement en maintenance et en exploitation. L'aéronef n'est plus la référence de maintenance mais c'est la pièce qui le devient.
- la sécurité de traçabilité des pièces est renforcée et le risque de contrefaçon est limité. Le suivi des données est optimisé et sécurisé.

L'invention n'est néanmoins pas limitée aux modes de réalisation exposés. A l'inverse, elle comprend tous les équivalents des caractéristiques décrites.

## Revendications

1. Procédé de maillage sans fil pour aéronef (1) comportant une multitude de composants dont on désire consulter et enregistrer diverses données propres dont des paramètres d'identification/authentification, historique et d'état de fonctionnement, ce procédé prévoyant une phase préalable d'installation sur des composants de l'aéronef (1), d'une pluralité d'étiquettes (17-17A) électroniques sans fil embarquées, chacune étant couplée et dédiée à un composant particulier, puis prévoyant une phase de transaction, avec une étape de transfert de données entre l'aéronef (1) et une installation (15) externe,
**caractérisé en ce que** la phase d'installation prévoit une étape d'embarquement sur l'aéronef (1) : d'au moins deux lecteurs (18) locaux, d'au moins un routeur (21) embarqué sans fil compatible et connecté à un ou plusieurs lecteurs (18) locaux, chaque lecteur (18) local étant compatible et proximal avec un groupe d'étiquettes (17-17A) électroniques, et d'au moins un concentrateur embarqué (23) sans fil compatible avec au moins un routeur (21) embarqué, ;
le procédé formant un maillage sans fil à trafic réduit, en configurant : au moins un noeud (19) de base qui relie sans fil un groupe d'étiquettes (17-17A) à leur lecteur (18) local exclusivement, une trame intermédiaire (22) qui relie sans fil ce lecteur (18) local exclusivement à au moins un routeur (21) embarqué, et une maille (24) embarquée terminale qui relie exclusivement ce routeur (21) embarqué au concentrateur embarqué (23) ; lors de l'étape de transfert, l'installation (15) externe communique sans fil exclusivement avec le concentrateur embarqué (23).

2. Procédé selon la revendication 1,
**caractérisé en ce que** lors de la phase de transaction, le concentrateur (23) reconnaît les différents transpondeurs (17-17A), lecteurs (18) et routeurs (21) connectés en réseau local sans fil, en recevant une information d'un lecteur proximal (18), ce concentrateur (23) dédié décode l'entête de cette information pour en connaître le destinataire et ne l'envoie que vers les transpondeurs (17-17A), lecteurs (18) et routeurs (21) prévus, ceci réduisant le trafic sur le maillage complet.

3. Procédé selon la revendication 2,
**caractérisé en ce que** le concentrateur (23) travaille sur des niveaux correspondant à la couche réseau du modèle OSI d'interconnexion du maillage sans fil, et les transpondeurs (17-17A) travaillent au niveau de la couche physique de ce modèle OSI d'interconnexion, les lecteurs (18) travaillant au niveau de la couche de liaison du modèle OSI.

4. Procédé selon l'une des revendications 1 à 3,
**caractérisé en ce que** les communications sans fil au sein d'un noeud de base (19), d'une trame intermédiaire (22) et d'une maille terminale (24) emploient la gamme des Ultra Haute Fréquences (UHF), notamment du type Réseau sans fil à dimensions Personnelles (WPAN).

5. Procédé selon l'une des revendications 1 à 4,
**caractérisé en ce que** les communications sans fil sont des liaisons radio sécurisées conformes à la norme IEEE802.15.4.

6. Aéronef (1) comportant un système de traçabilité apte à mettre en oeuvre le procédé selon l'une des revendications 1 à 5, ce système de traçabilité possédant : au moins un noeud (19) de base relie sans fil un groupe d'étiquettes (17-17A) à un lecteur (18) local exclusivement, une trame intermédiaire (22) qui relie sans fil ce lecteur (18) local exclusivement à au moins un routeur (21) embarqué, et une maille (24) embarquée terminale qui relie exclusivement ce routeur (21) embarqué à un concentrateur embarqué (23) ; **caractérisé en ce que** ce système de traçabilité est divisé en secteurs fonctionnels (4-11) au sein de chacun desquels secteurs (4-11) est agencé un groupe d'étiquettes (17-17A) électroniques, au moins un secteur (4) fonctionnel vital comportant une ou plusieurs étiquettes (17A) actives, tandis que d'autres secteurs de l'aéronef (1) comportent exclusivement des étiquettes (17) passives ou semi-actives.
